# EUROPÄISCHE PATENTANMELDUNG

(11) **EP 1 130 437 A1**
(43) Veröffentlichungstag der Anmeldung: **05.09.2001**
(21) Anmeldenummer: 01440007.1
(22) Anmeldetag: 18.01.2001
(51) Int. Cl.: G02B 6/44

(54) **Optisches Kabel**

(30) Priorität: 04.02.2000 DE 10005077
(71) Anmelder: ALCATEL, 75008 Paris (FR)
(72) Erfinder: Kwast, Ekkehard, 42699 Solingen (DE)
(74) Vertreter: Rausch, Gabriele, Dr.

(57) **Zusammenfassung**

Bei einem optischen Kabel, bestehend aus einem metallischen Kern (1) mit zumindest einem in Längsrichtung des Kerns (1) verlaufenden Kanal (2), in welchem zumindest ein Lichtwellenleiter (13) angeordnet ist, ist der zumindest eine Kanal (2) innerhalb der den Kern (1) Umhüllenden angeordnet und nach außen hin geschlossen.

## Beschreibung

Die Erfindung betrifft ein optisches Kabel nach dem Oberbegriff des Anspruchs 1.

Manchmal ist der Einsatz-von erd- oder röhrenverlegten Kabeln weder technisch möglich noch wirtschaftlich sinnvoll. Dies kann für den ländlichen Raum mit geringer Bevölkerungsdichte, für Gebiete mit felsigem Untergrund und im Gebirge gelten. Diese Fälle sprechen für den Einsatz von Luftkabeln.

Es sind metallfreie Luftkabel bekannt geworden, die vornehmlich in Gebieten mit häufigen Gewittern oder elektromagnetischer Beeinflussung verlegt werden. Nichtmetallische selbsttragende Luftkabel können auch in Hochspannungsnetzen eingesetzt werden. Solche Kabel müssen den hohen mechanischen Ansprüchen bei diesen Anwendungen standhalten und leicht montierbar sein.

Die Nachteile metallfreier Luftkabel bestehen darin, daß bei hohen elektrischen Feldern, welche von Hochspannungsleitungen verursacht werden, eine starke Alterung des aus Kunststoff bestehenden Schutzmantels einsetzt. Diese Alterung führt zur frühzeitigen Zerstörung des Schutzmantels und damit zur Zerstörung des nichtmetallischen Luftkabels. Damit ist die Nutzung stark eingeschränkt. Weitere Nachteile sind Zusatzlasten für das Mastensystem und die unterschiedlichen Ausdehnungskoeffizienten von nichtmetallische n Luftkabeln und metallischen Phasenseilen. Weiter nachteilig wirkt sich das unterschiedliche Durchhangsverhalten bei Eis- und/oder Windbelastungen aus, wodurch ebenfalls die Nutzung von dielektrischen Luftkabeln eingeschränkt wird.

Darüberhinaus ist der Querschnitt der metallfreien Luftkabel wegen der vorzusehenden Zugelemente relativ hoch, so daß derartige Kabel einen besonders hohen Windwiderstand aufweisen.

Es sind herkömmliche Freileitungsseile bekanntgeworden, welche Lichtwellenleiter enthalten. Eine Ausführungsform besteht darin, daß ein Draht des Seiles gegen ein Metallröhrchen mit exakt der gleichen Dimension wie der Draht ausgetauscht wird, wobei in dem Metallröhrchen zumindest ein Lichtwellenleiter angeordnet ist. Derartige Seile werden als Erdseile aber auch aus Phasenseile verwendet. Nachteilig ist hierbei, daß die Anzahl der unterzubringenden Lichtwellenleiter begrenzt ist.

Aus "Transfil Europe" No 35, März 1996, Seiten 62 - 67 ist ein Luftkabel bekannt geworden, welches aus einem runden Aluminiumprofil besteht, in welches nach außen offene Nuten eingebracht sind. In diesen Nuten sind sogenannte Bündeladern untergebracht, d. h. Kunststoffröhrchen, in denen Lichtwellenleiter verlaufen. Auf dem runden Aluminiumprofil sind mehrere dicht an dicht angeordnete Stahldrähte angeordnet, die mit einer Aluminiumschicht versehen sind. Die Stahldrähte dienen im wesentlichen als Zugentlastungselemente. Darüber hinaus verhindern sie, daß die Bündeladern aus den Nuten austreten können.

Der Erfindung liegt die Aufgabe zugrunde, ein Luftkabel anzugeben, welches einen geringen Querschnitt bei einer hohen Faserzahl aufweist. Darüberhinaus sollen die Lichtwellenleiter gegen mechanische, chemische sowie thermische Angriffe von außen weitestgehend geschützt sein.

Diese Aufgabe wird durch die im Kennzeichen des Anspruchs 1 erfaßten Merkmale gelöst.

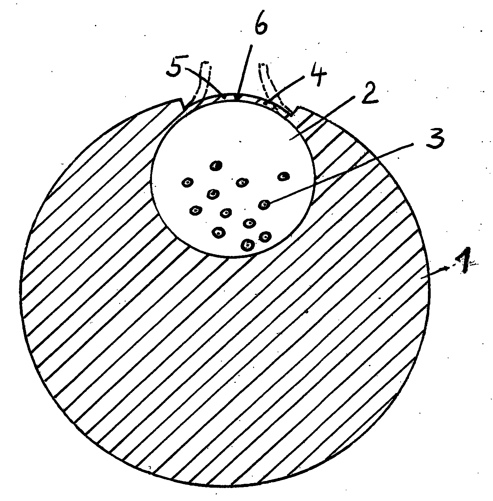

Die Erfindung ist anhand des in der Figur schematisch dargestellten Ausführungsbeispiels näher erläutert.

Das optische Kabel besteht aus einem Aluminiumprofil 1, welches vorzugsweise durch Strangpressen erzeugt ist, einem in dem Aluminiumprofil 1 verlaufenden Kanal 2 sowie diversen Lichtwellenleitern 3, die in dem Kanal 2 angeordnet sind. Der Kanal 2 ist nach außen hin geschlossen, und zwar durch die beiden Lappen 4 und 5, deren Enden durch eine Naht 6 verbunden sind.

Der Außendurchmesser des Aluminiumprofils 1 beträgt weniger als 6 mm. Der Durchmesser des Kanals 2 beträgt bei einem Außendurchmesser des Aluminiumprofils 1 von 6 mm in etwa 3 - 4 mm, so daß annähernd 48 Lichtwellenleiter 3 in dem Kanal 2 Platz finden.

Das in der Figur dargestellte optische Kabel weist eine kompakte Bauart sowie eine hohe Querdruckfestigkeit auf.

Die Herstellung des Kabels erfolgt zweckmäßigerweise so, daß zunächst ein rundes Profil 1 mit einem exzentrisch jedoch innerhalb des Querschnitts des Profils angeordneten Kanal 2 aus Aluminium oder einer Aluminiumlegierung durch Strangpressen erzeugt wird.

Nach dem Abkühlen des Profils 1 wird der Kanal 2 geöffnet und die Lappen 4 und 5 nach außen hochgebogen. In den nun offenen Kanal 2 werden die Lichtwellenleiter 3 eingelegt, die in der Figur gestrichelt dargestellten hochstehenden Lappen 4 und 5 heruntergeformt, wobei der Kanal 2 geschlossen wird, und die Kanten der Lappen 4 und 5 miteinander verschweißt werden. Das Verschweißen der Naht 6 erfolgt vorzugsweise durch Hochfrequenzschweißen. Dieses Verfahren zeichnet sich dadurch aus, daß die Schweißhitze sich auf den Schweißspalt konzentriert und somit die Lichtwellenleiter 3 nicht beschädigt. Darüberhinaus können Fertigungsgeschwindigkeiten bis zu 60 m/min erzielt werden.

Ein weiterer Vorteil ist, daß keine stabile Lage der Schweißnaht notwenig ist. Das bedeutet, daß trotz Rotation des Kerns ein einwandfreies Verschweißen möglich wird. Dieses ist ein besonderer Vorteil, wenn mehr als ein Kanal (2) zu verschweißen ist, und wenn die Überlänge der Fasern durch Verdrehen des Kerns erzielt wird. Das Verschweißen erfolgt, wenn die Lappen 4 und 5 im hochfrequenten Energiefeld kontaktieren. Dieses ist unabhängig von der Lage im zylindersymmetrischem Feld.

Die Überlänge der Lichtwellenleiter 3 in dem Kanal 2 wird zweckmäßigerweise dadurch hergestellt, daß die Lichtwellenleiter 3 in Form einer Wendel in den Kanal 2 eingelegt werden.

Die Anzahl der Kanäle 2 in dem Profil kann nahezu beliebig gewählt werden, wobei jedoch die Verteilung der Kanäle 2 in Umfangsrichtung gesehen gleichmäßig sein sollte.

Das optische Kabel gemäß der Lehre der Erfindung ist für diverse Anwendungsfälle geeignet.

So kann es beispielsweise im Zentrum eines Seekabels eingesetzt werden, wobei eine oder mehrere Lagen von Zugelementen auf das Profil 1 aufgeseilt werden. Das Profil 1 kann für diesen Fall als elektrischer Leiter für die Stromversorgung von Verstärkern genutzt werden.

Ein besonders vorteilhaftes Anwendungsgebiet sind die sogenannten "attached cables", wobei ein Kabel entlang eines bereits vorhandenen Seils oder Kabels befestigt wird. Die Befestigung kann hierbei durch Anlaschen, Umseilen, Umwickeln mit einem Band etc. erfolgen. Bei diesem Anwendungsfall stellt sich als besonderer Vorteil des erfindungsgemäßen optischen Kabels heraus, daß zum einen die Korrosion entfällt, wenn das Kabel an einem Erd- oder Leiterseil aus Aluminium befestigt wird, zum ändern entfällt nahezu jegliche Temperatureinschränkung.

Des weiteren wirkt sich hier die gute Flexibilität sowie die hohe Querdrucksteifigkeit des Kabels vorteilhaft aus, so daß sich eine einfache Verlegung ergibt.

Das optische Kabel nach der Lehre der Erfindung kann auch als Erdseil sowie als Phasenleiter in Hochspannungsanlagen eingesetzt werden.

## Patentansprüche

1. Optisches Kabel, bestehend aus einem metallischen Kern (1) mit zumindest einem in Längsrichtung des Kerns (1) verlaufenden Kanal (2), in welchem zumindest ein Lichtwellenleiter (3) angeordnet ist, **dadurch gekennzeichnet**, daß der zumindest eine Kanal (2) innerhalb der den Kern (1) Umhüllenden angeordnet ist und nach außen hin geschlossen ist.

2. Optisches Kabel nach Anspruch 1, **dadurch gekennzeichnet**, daß der metallische Kern (1) einen kreisförmigen Querschnitt aufweist.

3. Optisches Kabel nach Anspruch 1 oder 2, **dadurch gekennzeichnet,** daß der Kanal (2) einen kreisförmigen Querschnitt aufweist.

4. Optisches Kabel nach einem der Ansprüche 1 bis 3, **dadurch gekennzeichnet,** daß der Kanal (2) exzentrisch zum Mittelpunkt des Kerns (1) gelegen ist.

5. Optisches Kabel nach einem der Ansprüche 1 bis 4, **dadurch gekennzeichnet,** daß der Kern (1) ein stranggepreßtes Profil aus Aluminium oder einer Aluminiumlegierung ist.

6. Optisches Kabel nach einem der Ansprüche 1 bis 5, **dadurch gekennzeichnet,** daß zwischen dem Kanal (2) und der Umfangsfläche des Kernes (1) ein dünnwandiger Bereich (4,5) besteht.

7. Optisches Kabel nach Anspruch 6, **dadurch gekennzeichnet,** daß der dünnwandige Bereich (4,5) eine Naht (6) aufweist.

8. Optisches Kabel nach Anspruch 7, **dadurch gekennzeichnet**, daß die Naht (6) durch Schweißen geschlossen ist.

9. Verfahren zur Herstellung eines optischen Kabels nach einem der Ansprüche 1 bis 7, **dadurch gekennzeichnet**, daß zunächst ein metallisches Rundprofil mit einem in Längsrichtung des Rundprofils verlaufenden geschlossenen exzentrisch zum Mittelpunkt des Rundprofils gelegenen Kanal durch Extrusion erzeugt wird, daß der Kanal an seiner dünnen Wandung geöffnet wird, daß in den Kanal zumindest ein Lichtwellenleiter eingelegt wird und daß der Kanal verschlossen wird.

10. Verfahren nach Anspruch 9, **dadurch gekennzeichnet**, daß das Öffnen des Kanals spanlos erfolgt und die dünnen Wandungsteile nach außen geformt werden.

11. Verfahren nach Anspruch 10, **dadurch gekennzeichnet**, daß nach dem Einlegen des zumindest einen Lichtwellenleiters die Wandungsteile in ihren Ursprungszustand zurückgeformt werden und an ihrer Naht verschweißt werden.

12. Verfahren nach Anspruch 11, **dadurch gekennzeichnet**, daß die Naht mittels Hochfrequenzschweißen geschlossen wird.
